# EUROPEAN PATENT SPECIFICATION

(11) **EP 2 330 746 B1**
(45) Date of publication and mention of the grant of the patent: **11.09.2013**
(21) Application number: 09290907.6
(22) Date of filing: 04.12.2009
(51) Int. Cl.: H04B 1/04

(54) **RRM-Driven power amplifiers in transceiver units**
RRM-angetriebene Leistungsverstärker in Sende-/Empfangseinheiten
Amplificateurs d'alimentation commandés par RRM dans des unités d'émetteur-récepteur

(43) Date of publication of application: 08.06.2011
(73) Proprietor: Alcatel Lucent, 75007 Paris (FR)
(72) Inventor: Barth, Ulrich, 70825 Korntal-Münchingen (DE); Pascht, Andreas, 73635 Rudersberg (DE)
(74) Representative: Anderlini, Alain

(56) References cited:
- EP-A1- 0 977 354
- EP-A1- 0 987 817
- EP-A2- 1 351 403
- US-A- 5 561 395
- US-A- 5 903 854
- US-A1- 2005 099 222
- US-A1- 2006 139 089
- US-A1- 2006 160 504
- US-A1- 2008 102 767

## Description

### Technical Field of the Invention

The present invention relates to power reduction within mobile or wireless network infrastructures.

### Technical Background of the Invention

A base station is an access node within a mobile or wireless network infrastructure that provides radio access to User Equipment (UE), such as mobile or wireless terminals.

The base station may operate in accordance with e.g. GSM, CDMA, UMTS, LTE or Wimax mobile or wireless technology, or in accordance with any evolution thereof.

The base station is also referred to as a Base Transceiver station (BTS), a NodeB, an evolved-NodeB or e-NodeB, a radio access node, a radio access point, etc, depending on the selected terminology.

A base station comprises transceiver units for carrier modulation and signal amplification/shaping before transmission over the air.

The transceiver unit accommodates specific analog circuitry for the analog front end, and more specifically an analog power amplifier for amplifying the modulated signal up to the required power level. This amplified signal will ultimately drive the antenna, possibly after combination with further radio signals from further transceiver units.

The power amplifiers are responsible for a substantial part of the power consumption of the base station. Typical power amplifiers are class-AB amplifiers. Doherty or class-S amplifiers are known to be more power efficient for mobile or wireless communications.

The following background art, which may be regarded as useful for understanding the present invention and its relationship to the prior art, is further acknowledged and briefly discussed.

The European patent application entitled *"Transceiver with Front End Reconfiguration",* and published on october 8, 2003 with publication number EP 1351403, discloses a wireless communication device, comprising a digital circuit for performing digital processing in a signal path, an analog circuit for performing analog processing in the signal path, and a control circuit for selecting a configuration for the analog circuit.

There is further disclosed a loop process for configuring the analog circuit. First some desired characteristics are set, such as power consumption or signal quality. Next, one or more received signal characteristics and/or distortions are measured. Based on the measurements, the control circuit determines whether an improved configuration of the analog circuit is obtainable and, if so, applies the new configuration to the analog circuit to minimize the difference between the input desired characteristics and the characteristics expected in the following run. Ideally the selected configuration is such that the circuit gets a better linear behavior.

An optimal configuration of a receive power amplifier is determined according to the device characteristics, the desired signal characteristics and the desired system characteristics. The desired system characteristic is the low power PDC, the desired signal characteristic is the Inter-modulation Free Range (IFR), and the device characteristic is the supply voltage Vdd. More specifically, the control circuit optimally configures the gain and DC offset of one or more receive amplifier stages according to the measured offset and strength of the receive signal at the final output stage of the analog circuit, and with regard to the signal quality that is to be achieved. The control circuit tries to keep the power amplifiers efficient and linear over a wide range of output power values and over a variety of signal types.

The us patent application entitled *"System-in-Package Wireless Communication Device Comprising Prepackaged Power Amplifier",* and published on July 20, 2006 with publication number US 2006/160504, discloses a substantially rectangular shaped power amplifier module that includes a power amplifier for amplifying radio frequency signals, a bias control terminal and a power sensing terminal disposed on the same side of the power amplifier module, an input terminal and a ground terminal disposed on the same side of the power amplifier module, and an output terminal and one or more power supply terminals disposed on the same side of the power amplifier module.

### Summary of the Invention

It is an object of the present invention to reduce the power consumption of a transceiver unit at a further extent.

In accordance with a first aspect of the invention, a transceiver unit forming part of a base station comprises an analog power amplifier for amplifying a radio signal for further transmission over the air, and an amplifier control unit configured to be coupled to a Radio Resource Management (RRM) unit for managing radio resources of said transceiver unit, and further configured to control operation of said analog power amplifier according to RRM information supplied by said RRM unit. Said RRM information comprises transmit activity information of said transceiver unit as per whether any traffic is scheduled for the next m time slots.

In accordance with another aspect of the invention, a RRM unit for managing radio resources of a transceiver unit is configured to be coupled to an amplifier control unit of said transceiver unit, and is further configured to supply RRM information to said amplifier control unit for it to control operation of an analog power amplifier of said transceiver unit. Said RRM information comprises transmit activity information of said transceiver unit as per whether any traffic is scheduled for the next m time slots.

RRM is the system level control of co-channel interference and other radio transmission characteristics in mobile or wireless communication systems. RRM involves strategies and algorithms for controlling parameters such as the transmit power, the channel allocation, the handover criteria, the modulation scheme, the error coding scheme, etc. The objective is to utilize the limited radio spectrum resources and radio network infrastructures as efficiently as possible.

RRM is especially important in systems limited by co-channel interference rather than by noise, for example in networks consisting of many adjacent access points that may reuse the same channel frequencies.

The objective of RRM is therefore to maximize the system spectral efficiency while guaranteeing a certain grade of service. The latter involves covering a certain area and avoiding outage or impairments due to co-channel interference, noise, attenuation caused by long distances, fading caused by shadowing and multi-path, Doppler shift and other forms of distortion. The grade of service is also affected by blocking due to admission control, scheduling starvation or inability to guarantee the requested Quality of service (Qos).

Dynamic RRM schemes adaptively adjust the radio network parameters to the traffic load, user positions, Qos requirements, etc. Dynamic RRM schemes are considered in the design of wireless systems, in view to minimize expensive manual cell planning and achieve tighter frequency reuse patterns, resulting in improved system spectral efficiency. Some schemes are centralized in e.g. a Radio Network controller (RNC), others are distributed, either autonomous algorithms in base stations and user equipment, or coordinated algorithms by exchanging information between base stations.

Examples of dynamic RRM schemes are power control algorithms, link adaptation algorithms, Dynamic Channel Allocation (DCA) or Dynamic Frequency Selection (DFS) algorithms, traffic adaptive handover, adaptive filtering (e.g., Single Antenna Interference Cancellation (SAIC)), dynamic diversity schemes (e.g., soft handover, phased array antenna with beam-forming and/or Multiple-Input Multiple-Output (MIMO) communications and/or space-time coding), admission control, dynamic bandwidth allocation using resource reservation multiple access schemes or statistical multiplexing, cognitive radio, etc.

Thus, the RRM unit has the knowledge about the past, current and future amount of traffic to be scheduled over the air by a specific transceiver unit, as well as the respective radio resources and radio signal characteristics that are used.

The methods that will be applied for power saving depend on the short, mid and long term traffic variations. Currently standardized interfaces between base band units and transceiver units, such as Open Base station Architecture Initiative (OBSAI) or Common Public Radio Interface (CPRI), needs to be enhanced to pass these RRM information.

The RRM unit supplies RRM information to the amplifier control unit of the transceiver unit for it to dynamically adjust the operation of the analog power amplifier. The RRM information comprises transmit activity information of the transceiver unit as per whether any traffic is scheduled for the next m time slots. By exploiting this knowledge, the power amplifier can be operated with relaxed requirements in order to save energy.

The amplifier control unit can use this RRM information in different ways.

In one embodiment of the transceiver unit, said amplifier control unit is further configured to control operation of said analog power amplifier by switching off/on said analog power amplifier according to said RRM information.

The RRM information would then comprise transmit activity information of the transceiver unit as per whether any traffic is scheduled for the next m time slots. The RRM unit could signal to the amplifier control unit that no traffic will be scheduled during the next m time slots and that the power amplifier can be switched off.

Further characterizing embodiments are mentioned in the appended claims.

### Brief Description of the Drawings

The above and other objects and features of the invention will become more apparent and the invention itself will be best understood by referring to the following description of an embodiment taken in conjunction with the accompanying drawings wherein:
- fig. 1 represents a base station according to the invention,
- fig. 2 represents further details of a transceiver unit according to the invention.

### Detailed Description of the Invention

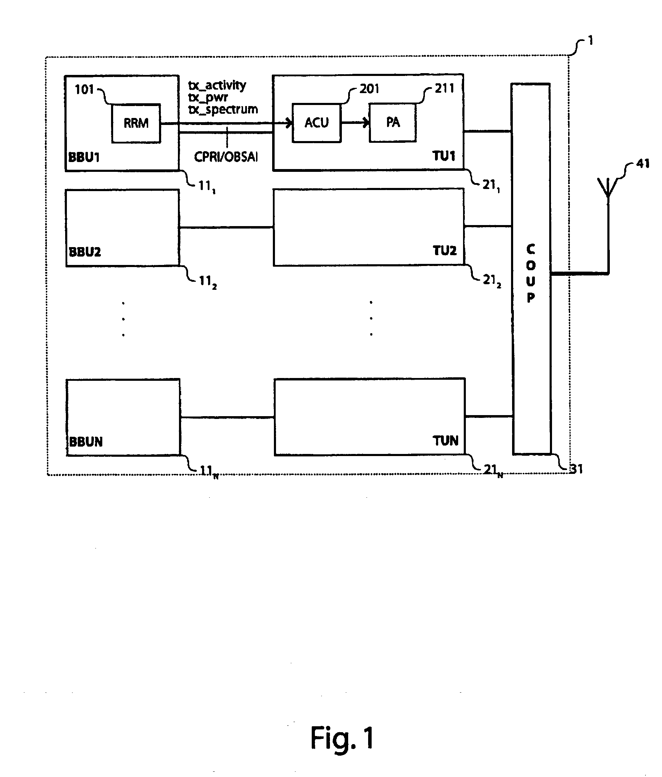

There is seen in fig. 1 a base station 1 that comprises functional blocks, the most noticeable of which are:
- N baseband units 11₁ to 11_{N} (or BBU1 to BBUN),
- N transceiver units 21₁ to 21_{N} (or Tu1 to TUN), and
- a coupling unit 31 (or COUP).

The N baseband units 11 are coupled to respective ones of the transceiver units 21 via e.g. CPRI or OBSAI standardized interfaces. The transceiver units 21 are coupled to the coupling unit 31, and the coupling unit 31 is further coupled to an external antenna 41.

In a remote radio head end configuration, also known as a distributed base station, all radio-related functions are embedded in a small single unit that can be deployed in a location remote from the main unit and close to the antenna.

The baseband units 11 comprise means for processing the received and transmit symbol streams. The baseband units 11 implements the necessary protocol suites for terminating or relaying data and control packets towards/from the UEs.

The transceiver units 21 comprise means for modulating, amplifying and shaping the transmit signal that ultimately feds the antenna 41, and for filtering, amplifying and de-modulating the received signal from the antenna 41.

The coupling unit 31 is for coupling the different transmit signals from the respective transceiver units 21 towards the antenna 41, and for dispatching the receive signal from the antenna 41 towards the transceiver units 21.

Further details of the baseband unit 11₁ and of the transceiver unit 21₁ are shown.

The baseband unit 11₁ comprises a RRM unit 101 for assigning and managing the radio resources of the transceiver unit 21₁.

The transceiver unit 21₁ comprises an analog power amplifier 211 (or PA) for amplifying and shaping the transmit signal, and an amplifier control unit 201 (or ACU) for controlling the operation of the power amplifier 211.

The RRM unit 101 is coupled to the amplifier control unit 201. The amplifier control unit 201 is further coupled to the power amplifier 211.

The RRM unit 101 supplies the following pieces of information to the amplifier control unit 201:
- transmit activity information tx_activity, such as whether any traffic is scheduled for the next m time slots,
- transmit power information tx_pwr indicative of the maximum transmit power that shall be currently supported by the transceiver unit 21₁, which value being updated depending on the respective path losses incurred by the UEs or on the configured transmit power for the transceiver unit 21₁ or the base station 1, and
- transmit spectrum information tx_spectrum, such as how wide is the spectrum currently used by the transceiver unit 21₁ in increment of e.g. 5 MHz (i.e., 5, 10 , 15 or 20 MHz wide for LTE).

These RRM information are used by the amplifier control unit 201 for controlling the operation of the power amplifier 211.

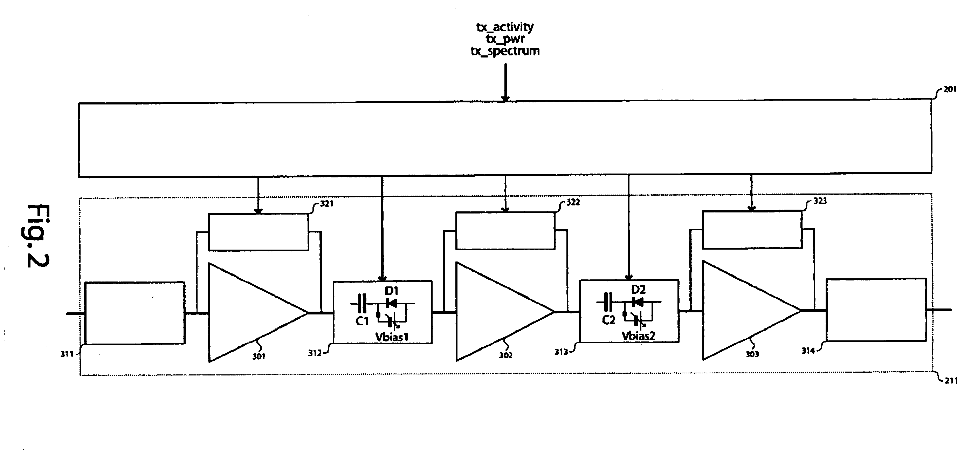

There is seen in fig. 2 further details about the transmit path of the transceiver unit 21₁, and more specifically about the way the amplifier control unit 201 controls and interacts with the power amplifier 211.

Fig. 2 shows a typical multi-stage amplification for a base station radio front-end. The design is set-up to independently control the biasing of the different stages and the interstage matching networks.

As an exemplary embodiment, the power amplifier 211 comprises the following functional blocks:
- 3 amplification stages 301, 302 and 303,
- 4 matching networks 311, 312, 313 and 314, and
- 3 biasing circuitries 321, 322 and 323 for setting the biasing (or operating) points of the respective amplification stages.

An output terminal of the input matching network 311 is coupled to an input terminal of the first amplification stage 301. An output terminal of the first amplification stage 301 is coupled to an input terminal of the inter-stage matching network 312. An output terminal of the inter-stage matching network 312 is coupled to an input terminal of the second amplification stage 302. An output terminal of the second amplification stage 302 is coupled to an input terminal of the inter-stage matching network 313. An output terminal of the inter-stage matching network 313 is coupled to an input terminal of the third and last amplification stage 303. An output terminal of the third amplification stage 303 is coupled to an input terminal of the output matching network 314.

The first biasing circuitry 321 controls the bias point of the first amplification stage 301, and is coupled to an input terminal and an output terminal of the first amplification stage 301. The second biasing circuitry 322 controls the bias point of the second amplification stage 302, and is coupled to an input terminal and an output terminal of the second amplification stage 302. The third biasing circuitry 323 controls the bias point of the third amplification stage 303, and is coupled to an input terminal and an output terminal of the third amplification stage 303.

The amplifier control unit 201 is coupled to the power feeding of the amplification stages 301, 302 and 303 (not shown), and is adapted to control their power feeding according to the transmit activity information tx_activity supplied by the RRM unit 101.

If no traffic is scheduled for the next m time slots, then the amplification control unit 201 disconnects the power supply of the 3 amplification stages 301, 302 and 303 during this period of transmission inactivity, thereby reducing the power consumed by the power amplifier 211 and further by the base station 1.

The amplifier control unit 201 is further coupled to the inter-stage matching networks 312 to 313, and is further adapted to adjust and/or modify their hardware circuitry according to the transmit spectrum information tx_spectrum supplied by the RRM unit 101.

Both inter-stage matching networks 312 and 313 are set up equal. As an exemplary embodiment, a PIN diode is used to control the center frequency and the bandwidth of the interstage matching networks 312 and 313.

In principle the interstage matching is based on L and C filters. The PIN diode is acting as a voltage controlled capacitor. Depending on the in build current of the PIN diode, the capacitor of the diode and thus the filter characteristics are changed. This technique is used to adjust the bandwidth and the center frequency of the interstage matching networks 312 and 313.

The interstage matching networks 312 and 313 are voltage controlled via PIN diodes D1 and D2 respectively, which are mounted serially with capacitors C1 and C2 respectively. Depending on the control voltage vbias1 and vbias2 of the PIN diodes D1 and D2 respectively, the inherent capacitance and therefore the bandwidth and the center frequency of the interstage matching networks 312 and 313 can be modified and adapted to the current traffic profile.

The amplifier control unit 201 is further coupled to the bias circuitry 321, 322 and 323, and is further adapted to adjust the bias point of the respective amplification stages according to the transmit power information tx_pwr supplied by the RRM unit 101.

Each amplification stage has a bias control consisting of an input bias control and of an output bias control. The input bias controls the gate voltage of the device and therefore the channel control voltage of a Field Effect Transistor (FET). The output control voltage is responsible for the drain voltage of the device. The combination of the gate voltage and the drain voltage selects the operating point of the device and therefore the output current. In combination with a driven load, this results in a dedicated gain value and therefore the control of the consumed power.

In an alternative embodiment, the RRM unit is a centralized unit, either forming part of the base station 1 or of another network element of the Radio Access Network (RAN). This centralized RRM unit would then be coupled to respective ones of the transceiver units 21, and more specifically to the amplifier control units embedded therein.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

## Claims

1. **A transceiver unit** (21₁) forming part of **a base station** (1) and comprising **an analog power amplifier** (211) for amplifying **a radio signal** for further transmission over the air,
*wherein* said transceiver unit further comprises **an amplifier control unit** (201) configured to be coupled to **a Radio Resource Management RRM unit** (101) for managing radio resources of said transceiver unit, and further configured to control operation of said analog power amplifier according to **RRM information** (tx_activity, tx_spectrum) supplied by said RRM unit,
*and wherein* said RRM information comprises transmit activity information (tx_activity) of said transceiver unit as per whether any traffic is scheduled for the next m time slots.

2. **A transceiver unit** (21₁) according to claim 1, *wherein* said amplifier control unit is further configured to control operation of said analog power amplifier by switching off/on said analog power amplifier according to said RRM information.

3. **A Radio Resource Management RRM unit** (101) for managing radio resources of **a transceiver unit** (21₁),
*wherein* said RRM unit is configured to be coupled to **an amplifier control unit** (201) of said transceiver unit, and is further configured to supply **RRM information** (tx_activity, tx_spectrum) to said amplifier control unit for it to control operation of **an analog power amplifier** (211) of said transceiver unit,
*and wherein* said RRM information comprises transmit activity information (tx_activity) of said transceiver unit as per whether any traffic is scheduled for the next m time slots.

4. **A base station** (1) comprising **a transceiver unit** (21₁) according to claim 1 or 2.

5. **A base station** (1) according to claim 4, and further comprising **a RRM unit** (101) according to claim 3.

6. **A base station** (1) according to claim 4 or 5, wherein said base station is a Global system Mobile GSM Base Transceiver Station BTS, or is a Code Division Multiple Access CDMA BTS, or is a Universal Mobile Telecommunication System UMTS NodeB, or is a Long Term Evolution LTE evolved-NodeB, or is a wimax base station.

## Patentansprüche

1. **Sende-/Empfangseinheit** (21₁), welche Bestandteil einer **Basisstation** (1) ist und einen **analogen Leistungsverstärker** (211) zur Verstärkung eines **Funksignals** für die weitere Übertragung über eine Funkverbindung umfasst,
*wobei* die besagte Sende-/Empfangseinheit eine **Verstärkersteuereinheit** (201) umfasst, die dafür konfiguriert ist, an eine **Funkressourcenverwaltungs- bzw. RRM-Einheit** (101) gekoppelt zu werden, um die Funkressourcen der besagten Sende-Empfangseinheit zu verwalten, und weiterhin dafür konfiguriert ist, den Betrieb des besagten analogen Leistungsverstärkers gemäß den von der besagten RRM-Einheit bereitgestellten **RRM-Informationen** (tx_activity, tx-spectrum) zu steuern,
*und wobei* die besagten RRM-Informationen Sendeaktivitätsinformationen (tx_activity) der besagten Sende-/Empfangseinheit darüber, ob für die kommenden m Zeitschlitze Verkehr geplant ist, umfassen.

2. **Sende-/Empfangseinheit** (21₁) nach Anspruch 1,
*wobei* die besagte Verstärkersteuereinheit weiterhin für die Steuerung des Betriebs des besagten analogen Leistungsverstärkers durch Ein-/Ausschalten des besagten analogen Leistungsverstärkers gemäß den besagten RRM-Informationen konfiguriert ist.

3. **Funkressourcenverwaltungs- bzw. RRM-Einheit** (101) zur Verwaltung von Funkressourcen einer **Sende-/Empfangseinheit** (21₁),
*wobei* die besagte RRM-Einheit dafür konfiguriert ist, an eine **Verstärkersteuereinheit** (201) der besagten Sende-/Empfangseinheit gekoppelt zu werden, und weiterhin dafür konfiguriert ist, **RRM-Informationen** (tx_activity, tx-spectrum) an die besagte Verstärkersteuereinheit bereitzustellen, damit diese den Betrieb **eines analogen Leistungsverstärkers** (211) der besagten Sende-/Empfangseinheit steuert,
*und wobei* die besagten RRM-Informationen Sendeaktivitätsinformationen (tx_activity) der besagten Sende-/Empfangseinheit darüber, ob für die kommenden m Zeitschlitze Verkehr geplant ist, umfassen.

4. **Basisstation** (1), umfassend eine **Sende-/Empfangseinheit** (21₁) gemäß Anspruch 1 oder 2.

5. **Basisstation** (1) nach Anspruch 4, und weiterhin umfassend eine **RRM-Einheit** (101) nach Anspruch 3.

6. **Basisstation** (1) nach Anspruch 4 oder 5, wobei die besagte Basisstation eine Global System Mobile- bzw. GSM-Sende-/Empfangs-Basisstation, BTS, oder eine Code Division Multiple Access- bzw. CDMA-BTS, oder ein Universal Mobile Telecommunication System- bzw. UMTS-B-Knoten, oder ein Long Term Evolution- bzw. LTE-evolved-BKnoten, oder eine Wimax-Basisstation ist,

## Revendications

1. **Unité d'émission/réception** (21₁) faisant partie d'une **station de base** (1) et comprenant **un amplificateur de puissance analogique** (211) pour amplifier **un signal** radio pour une transmission radio ultérieure,
*dans laquelle* ladite unité d'émission/réception comprend en outre **une unité de commande d'amplification** (201) configurée pour être couplée à **une unité de gestion de ressources radio RRM** (101) pour gérer des ressources radio de ladite unité d'émission/réception, et configurée en outre pour commander le fonctionnement dudit amplificateur de puissance analogique conformément aux **informations RRM** (tx_activity, tx_spectrum) fournies par ladite unité RRM,
*et dans laquelle* lesdites informations RRM comprennent des informations d'activité de transmission (tx_activity) de ladite unité d'émission/réception selon si un quelconque trafic est planifié pendant les m créneaux temporels suivants.

2. **Unité d'émission/réception** (21₁) selon la revendication 1, *dans laquelle* ladite unité de commande d'amplification est en outre configurée pour commander le fonctionnement dudit amplificateur de puissance analogique en désactivant/activant ledit amplificateur de puissance analogique conformément auxdites informations RRM.

3. **Unité de gestion de ressources radio RRM** (101) pour gérer des ressources radio d'une **unité d'émission/réception** (21₁),
*dans laquelle* ladite unité RRM est configurée pour être couplée à **une unité de commande d'amplification** (201) de ladite unité d'émission/réception, et est en outre configurée pour fournir des **informations RRM** (tx_activity, tx_spectrum) à ladite unité de commande d'amplification pour qu'elle commande le fonctionnement d'un **amplificateur de puissance analogique** (211) de ladite unité d'émission/réception,
*et dans laquelle* lesdites informations RRM comprennent des informations d'activité de transmission (tx_activity) de ladite unité d'émission/réception selon si un quelconque trafic est planifié pendant les m créneaux temporels suivants.

4. **Station de base** (1) comprenant une **unité d'émission/réception** (21₁) selon la revendication 1 ou 2.

5. **Station de base** (1) selon la revendication 4, et comprenant en outre **une unité RRM** (101) selon la revendication 3.

6. **Station de base** (1) selon la revendication 4 ou 5, dans laquelle ladite station de base est une station émettrice/réceptrice de base BTS de système mondial pour communication avec les mobiles GSM, ou est une BTS à accès multiple par répartition en code CDMA, ou est un noeud B du système universel de télécommunications mobiles UMTS, ou est un noeud B évolué d'évolution à long terme LTE, ou est une station de base Wimax.
